# FASCICULE DE BREVET EUROPEEN

(11) **EP 1 973 817 B1**
(45) Date de publication et mention de la délivrance du brevet: **19.08.2009**
(21) Numéro de dépôt: 07712026.9
(22) Date de dépôt: 15.01.2007
(51) Int. Cl.: B65G 27/34, B65G 27/02, B65G 27/04, G21C 21/02, B65G 47/244

(54) **CRIBLAGE ET MISE EN LIGNE DE PASTILLES DE COMBUSTIBLE NUCLÉAIRE**
SCREENING UND VERWENDUNG VON NUKLEARBRENNSTOFFPILLEN
SCREENING AND UTILIZATION OF NUCLEAR FUEL PELLETS

(30) Priorité: 16.01.2006 FR 0650143
(43) Date de publication de la demande: 01.10.2008
(73) Titulaire: Areva NC, 75009 Paris (FR)
(72) Inventeur: PANDRAUD, Jean-Luc, F-30330 Cavillargues (FR); REYROLLE, Florian, F-30290 Laudun (FR); FRANCOIS, Dominique, F-30630 Verfeuil (FR); BLANCHER, Jérôme, F-84350 Courtaezon (FR)
(74) Mandataire: Poulin, Gérard
(86) Numéro de dépôt international: PCT/EP2007/050315
(87) Numéro de publication internationale: WO 2007/080188

(56) Documents cités:
- DE-U1- 9 004 198
- US-A- 3 454 162

## Description

### DOMAINE TECHNIQUE

La présente invention se rapporte à la fabrication de crayons utilisés comme éléments combustibles nucléaires, et notamment à leur remplissage par des pastilles. Plus précisément, l'invention concerne l'étape de mise en place des pastilles avant leur insertion dans les gaines des crayons.

Plus généralement, l'invention concerne la mise en ligne d'objets cylindriques à partir d'un rangement en vrac : l'invention se rapporte à un dispositif et à un procédé permettant d'aligner des objets cylindriques à partir de nacelles dans lesquelles ils ont été stockés, tout en éliminant les éléments qui y auraient été mêlés, comme notamment des éclats de pastilles de combustible nucléaire.

### ÉTAT DE LA TECHNIQUE ANTÉRIEURE

Lors de la fabrication de combustible nucléaire, décrite par exemple dans FR 2 825 307, des pastilles sont obtenues par un pressage de poudres suivi par un frittage à haute température. Le frittage est effectué dans des nacelles réfractaires dans lesquelles les pastilles pressées peuvent être disposées de façon aléatoire. Les pastilles frittées, après éventuel stockage, sont ensuite rectifiées, c'est-à-dire ajustées à la taille de la gaine dans laquelle elles sont finalement insérées pour former les crayons de combustible, après de nombreux contrôles intermédiaires (comme la vérification des dimensions).

Pour permettre le déroulement plus ou moins continu du processus de fabrication, les pastilles stockées en vrac dans les nacelles doivent donc être alignées. Par exemple, le document FR 2 667 398 décrit l'alignement des pastilles au moyen d'un bol vibrant dans lequel les pastilles sont versées. Un tel bol, classiquement utilisé, peut être adapté pour minimiser la présence de résidus : voir JP 10029719. De plus, les différentes étapes impliquent le déplacement des pastilles, par exemple le long d'un convoyeur, qui peut notamment comprendre une bande ou un « bi-fil » tel que décrit dans FR 2 779 134.

Il apparaît que des dysfonctionnements et blocages peuvent survenir, par exemple lorsqu'une pastille n'est pas bien positionnée et/ou lorsque,des éclats ou poussières se déposent sur le convoyeur ; ces incidents sont préjudiciables en termes de temps et de coûts, au vu des arrêts occasionnés, mais également du rejet des pastilles conformes aux spécifications qui ont été bloquées.

Pour réduire les risques de blocages sur la ligne de production, il est ainsi souhaitable de limiter la quantité d'éclats, de fragments et de poussières de pastilles le plus tôt possible, et notamment lors de leur mise en ligne avant rectification. Aucun dispositif existant ne permet de remplir toutes ces conditions.

### EXPOSÉ DE L'INVENTION

L'invention se propose de pallier les inconvénients des dispositifs existants et concerne un système permettant d'atteindre les buts susmentionnés.

Plus généralement, l'invention a pour objet un système permettant de séparer des objets cylindriques plus ou moins uniformes et rangés en vrac, de les trier pour ne garder que ceux répondant à certaines spécifications, d'évacuer vers un système de collecte les résidus et d'aligner les objets conformes. D'application particulière pour les pastilles de combustible nucléaire, le système peut être positionné dans une boîte à gants et fonctionner de façon automatique.

Sous l'un de ses aspects, l'invention concerne un dispositif de convoyage, comprenant éventuellement un couloir vibrant en amont et comprenant une succession d'au moins deux cribles mis en mouvement de préférence par des embases vibrantes, en aval du couloir vibrant dans le sens de déplacement des objets. Les moyens pour faire vibrer les cribles sont indépendants, et adaptés pour générer un déplacement de vitesse différente pour chacun ; par ailleurs, deux cribles au moins sont séparés l'un de l'autre dans une direction verticale (en fait, perpendiculaire au sens de déplacement), de sorte que les objets cylindriques se déplaçant sur le dispositif subissent une discontinuité de mouvement permettant leur retournement.

A part leur vitesse de déplacement, les deux cribles sont avantageusement identiques, composés de barreaux horizontaux dont l'axe est parallèle au déplacement des objets, espacés d'un pas adapté à la taille des objets et de préférence égal au diamètre des barreaux. Avantageusement, les deux cribles, outre leur espacement vertical, sont décalés horizontalement d'un demi-pas, de sorte que les barreaux du premier crible soient face à un espace du deuxième crible.

Chaque crible est associé avantageusement à un récipient, éventuellement un seul pot pour les deux cribles, permettant de récupérer les éclats passant entre les barreaux.

Le convoyeur selon l'invention est de préférence associé en aval à un bol vibrant permettant la mise en ligne des objets cylindriques, et en amont à un dispositif permettant de retourner.un récipient de stockage de ces objets.

Sous un autre aspect, l'invention a pour objet un procédé permettant de mettre en ligne des objets cylindriques stockés en vrac tout en effectuant une première sélection d'objets de dimensions prédéterminées, notamment en évacuant les éclats et poussières des objets cylindriques hors du convoyage, de préférence en les récupérant dans un pot associé. Le procédé comprend la mise en place des objets sur un premier élément de convoyage, éventuellement dual, comprenant un crible mis en vibration, notamment des barreaux alignés parallèlement à leur axe et espacés, le déplacement des objets grâce à la vibration du crible vers un deuxième crible, de préférence identique au premier, séparé de la première nappe de barreaux verticalement et décalé dans le plan horizontal, le transfert des objets sur le deuxième crible par une chute avec possible retournement, le déplacement des objets sur le deuxième crible par mise en vibration de celui-ci, avantageusement à une vitesse supérieure à la première.

De.préférence, le procédé est utilisé pour des pastilles de combustible nucléaire issues d'une nacelle de stockage renversée, dans un environnement confiné, pour leur transfert vers un bol vibrant permettant leur mise en ligne organisée.

### BRÈVE DESCRIPTION DES DESSINS

Les caractéristiques et avantages de l'invention seront mieux compris à la lecture de la description qui va suivre et en référence aux dessins annexés, donnés à titre illustratif et nullement limitatifs.
La figure 1 illustre schématiquement un dispositif de mise en ligne existant.
Les figures 2A et 2B montrent un système selon l'invention.

### EXPOSÉ DÉTAILLÉ DE MODES DE RÉALISATION PARTICULIERS

Une fois pressées, les pastilles de combustible nucléaire sont placées dans un système de stockage, telle une nacelle pouvant être insérée dans le four de frittage. En particulier, selon un mode de réalisation préféré, les nacelles comprennent entre 9 et 12 Kg de pastilles en vrac, c'est-à-dire non ordonnées.

Une fois frittées, selon un mode avantageux mais seulement à titre d'exemple, les pastilles sont des cylindres de révolution de diamètre 8 à 9,5 mm et de longueur 11 à 12 mm, pesant entre 6 et 8 g. Des pastilles peuvent avoir été fracturées lors du frittage, générant des résidus plus ou moins particulaires, qui restent la plupart du temps mêlés au stock de pastilles.

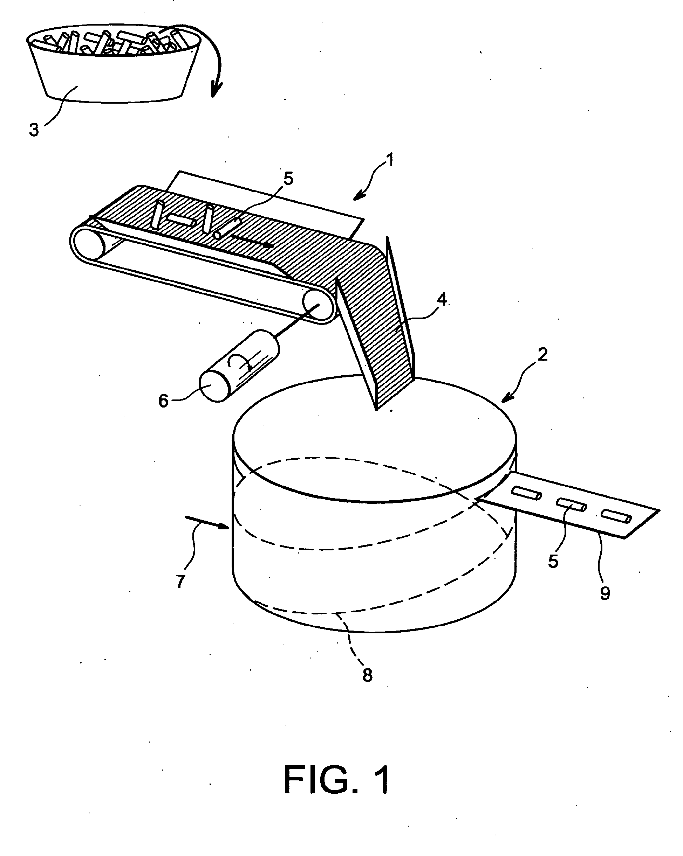

Lorsque les pastilles ainsi fabriquées sont destinées à être insérées dans des crayons de combustible nucléaire, selon les systèmes existants, les nacelles sont retournées sur un convoyeur à bande au moyen d'un dispositif mécanique classique. Tel qu'illustré schématiquement sur la figure 1, le convoyeur à bande 1 de l'art antérieur permet d'alimenter un bol vibrant 2 avec le contenu des nacelles 3 au moyen d'un bec verseur 4 : la bande d'alimentation du convoyeur 1 assure le déplacement en vrac des pastilles 5 jusqu'au bol vibrant 2, par exemple au moyen d'un moteur triphasé 6, l'avance étant asservie par un capteur de remplissage 7 du bol vibrant 2.

La géométrie du bol 2 et les vibrations générées créent une mise en ligne des pastilles 5 : les pastilles 5 tournent à l'intérieur de la cuve du bol 2 tout en montant sur des rampes 8, étant ainsi conduites jusqu'à la sortie du bol 2 où elles sont reprises par un convoyeur 9 qui les amènera jusqu'aux meules de rectification.

Il est évident que, tant pour l'état de la technique que pour le système selon l'invention, ces étapes de fabrication du combustible nucléaire sont effectuées dans un environnement clos hermétique, de type boîte à gants, automatisées, avec intervention humaine éventuelle uniquement à distance.

Selon l'invention, le convoyeur 1 et le bec verseur 4 classiques sont remplacés, de façon à effectuer un tri préliminaire et à ne déverser dans le bol 2 que des pastilles 5 répondant à des exigences minimum, en évitant toute poussière ou tout éclat contaminants.

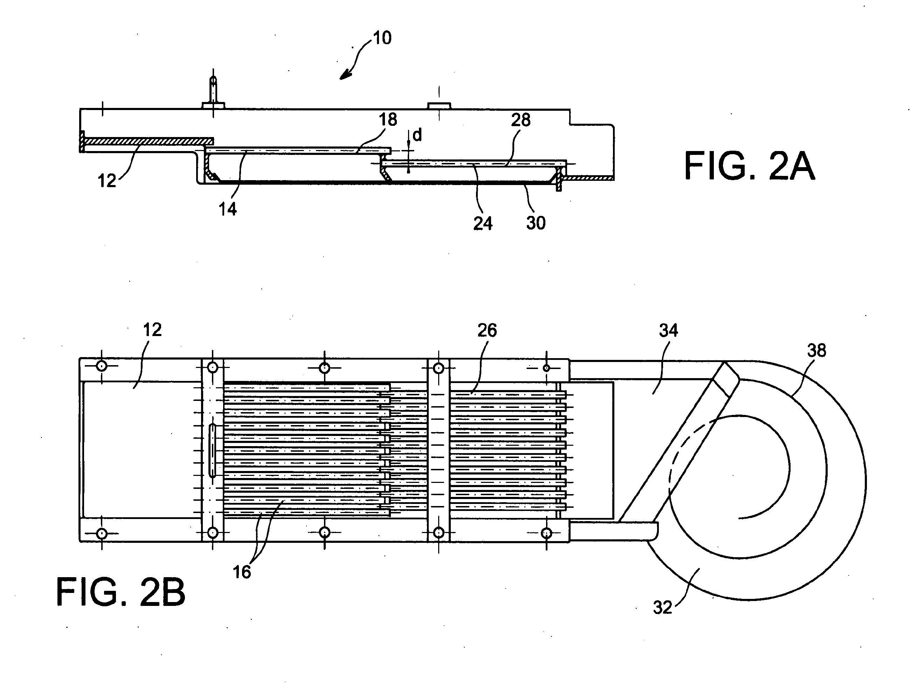

En particulier, au lieu d'être renversée sur un simple convoyeur 1, la nacelle 3 est retournée, par des moyens mécaniques qui peuvent être similaires aux précédents, progressivement sur un dispositif de convoyage 10 qui permet d'étaler les pastilles pour en réguler le flux. Comme illustré sur les figures 2A et 2B, de préférence, le dispositif de convoyage 10 comprend en amont un couloir 12 semblable au convoyeur 1 précédent qui permet de répartir sur sa surface l'ensemble des pastilles déversées afin de ne pas retarder l'appel d'une nouvelle nacelle 3.

Le couloir vibrant 12 alimente un premier crible 14 qui le prolonge et permet l'élimination des éclats de pastilles 5 ; il est possible également de verser le contenu de la nacelle 3 directement sur ce premier crible 14. Le premier crible 14 peut notamment être constitué d'une nappe de barreaux métalliques 16, parallèles entre eux selon leur axe longitudinal et dont l'espacement permet la circulation des pastilles 5 intègres tout en éliminant les éclats qui tombent entre les barreaux 16. De préférence, chaque barreau 16 a un diamètre de l'ordre de 6 mm pour l'application visée, et le pas de la nappe est également de l'ordre de 6 mm.

Avantageusement, la vibration du crible 14 est obtenue par l'intermédiaire d'une embase vibrante 18 à laquelle les barreaux 16 sont reliés ; l'amplitude et la fréquence des vibrations permettent de déterminer une vitesse d'avancement des pastilles 5. Un tel système de déplacement est connu par exemple du document JP 1 318 996.

Selon l'invention, le dispositif de convoyage 10 comprend en outre un deuxième crible 24, avantageusement de même nature que le premier, décalé verticalement et vers le bas par rapport au premier 14, de façon à obliger les pastilles 5 arrivant à son extrémité à faire une pirouette lors du passage de la grille supérieure 14 à la grille inférieure 24. De préférence, le deuxième crible 24 est séparé du premier d'une distance verticale d qui est légèrement inférieure à la longueur d'une pastille 5, de sorte que la pastille 5 ne peut pas « tomber » en amont du crible 24 et ne se casse pas.

De plus, de préférence, les barreaux 26 du deuxième crible 24 sont également décalés dans le plan horizontal d'un demi-pas, en une sorte de quinconce, qui permet d'accentuer le retournement des pastilles 5 occasionné par le franchissement du décalage vertical. Ainsi, les plus gros éclats, qui auraient pu circuler sur la première partie 14 du dispositif 10 sans être piégés, peuvent également être éliminés.

Le deuxième crible 24, tout comme le premier, est avantageusement mis en vibration par l'intermédiaire d'une embase 28, dont cependant la fréquence et l'amplitude des vibrations sont de préférence déterminées pour que la vitesse de déplacement des pastilles sur le deuxième crible 24 soit supérieure à la vitesse de déplacement sur le premier crible 14. Ainsi, par cassure de la vitesse et latence due à la chute, les objets cylindriques 5 peuvent être séparés, et aucun engorgement ne se produit.

Cette partie aval 14, 24 du dispositif de convoyage 10 selon l'invention permet donc d'écarter la totalité des éclats et poussières du flux de pastilles 5 arrivant du couloir vibrant 12. La récupération des éclats se fait par exemple dans un pot 30 placé sous les cribles 14, 24 et muni d'un capteur de remplissage.

Par éclats, il faut comprendre des parties de pastilles, résidus de fracture lors du pressage, mais aussi par exemple des rondelles (pastilles trop courtes) ou des morceaux (pastilles cassées lors du frittage) : selon le pas des cribles 14, 24, une présélection des pastilles 5 peut être effectuée, de façon à limiter au maximum les risques de blocage sur les moyens de convoyage en aval du présent dispositif 10.

Comme dans l'art antérieur illustré sur la figure 1, les pastilles 5 ainsi triées sont déversées dans un dispositif de mise en ligne tel qu'un bol 32, par l'intermédiaire d'un bec 34 ; le bol 32 comprend de façon avantageuse un hélicoïde 38 ouvert vers le haut pour permettre la préhension des pastilles par le dessus. Le flux de pastilles 5 à la sortie du dispositif, c'est-à-dire de l'ensemble constitué du couloir 12, des cribles 14, 24 et du bol 32 peut être réglé entre 2 et 3,3 pastilles par seconde (± 5 %).

En sortie de bol 32, avantageusement et tel qu'il est connu, un convoyage 9 (voir figure 1) peut amener les pastilles alignées jusqu'à une rectifieuse, puis à un système de contrôle du diamètre, et ainsi de suite jusqu'à réalisation des crayons.

## Revendications

1. Dispositif de convoyage (10), destiné à mettre des objets cylindriques (5) susceptibles de contenir des éclats, tels que des pastilles de combustibles nucléaires, le dispositif comprenant au moins un premier crible vibrant (14) et un deuxième crible vibrant (24) permettant chacun le déplacement des objets selon une première direction par leur vibration, le premier crible (14) et le deuxième crible (24) étant composés chacun de barreaux (16, 26) parallèles régulièrement espacés, dont l'axe longitudinal forme la première direction, étant localisés l'un à la.suite de l'autre dans le sens de déplacement et étant écartés l'un de l'autre selon une deuxième direction verticale, dispositif dans lequel chacun des cribles (14, 24) est couplé à des moyens de mise en vibration (18, 28) indépendants l'un de l'autre, de sorte que la vitesse de déplacement sur le deuxième crible (24) est supérieure à la vitesse de déplacement sur le premier crible (14).

2. Dispositif selon la revendication 1 dans lequel les barreaux de chaque crible sont similaires, et les barreaux (26) du deuxième crible (24) sont décalés d'un demi pas par rapport aux barreaux (16) du premier crible (14) dans le plan du crible.

3. Dispositif selon l'une des revendications 1 ou 2 comprenant en outre un couloir (12) connecté en amont du premier crible (14) et permettant le déplacement des objets cylindriques (5) selon la première direction vers le premier crible (14).

4. Dispositif selon l'une des revendications précédentes comprenant en outre au moins un pot (30) permettant de récupérer des éclats et poussières passés au travers des cribles (14, 24).

5. Dispositif selon l'une des revendications précédentes comprenant en outre un bol vibrant (32) en aval du dernier crible (24).

6. Procédé pour mettre en ligne des objets cylindriques (5) susceptibles de contenir des éclats, tels que des pastilles de combustible nucléaire, procédé comprenant le positionnement des objets cylindriques sur un premier crible (14), le déplacement des objets (5) par la vibration du premier crible (14) dans une première direction vers une extrémité du premier crible (14), la chute des objets cylindriques (5) sur un deuxième crible (24) situé sous le premier crible (14), le déplacement des objets (5) sur le deuxième crible (24) par sa vibration, procédé dans lequel la vitesse de déplacement des objets (5) sur le deuxième crible (24) est supérieure à la vitesse de déplacement des objets (5) sur le premier crible (14).

7. Procédé selon la revendication 6 dans lequel le deuxième crible (24) est séparé verticalement du premier crible (14) d'une distance (d) inférieure à la longueur des objets (5).

8. Procédé selon l'une des revendications 6 ou 7 dans lequel chaque crible (14, 24) est composé de barreaux (16, 26) parallèles espacés d'un pas constant dans le sens de déplacement des objets cylindriques (5), les barreaux (26) du deuxième crible (24) étant décalés d'un demi pas des barreaux (16) du premier crible (14) dans le plan des cribles.

9. Procédé selon l'une des revendications 6 à 8 comprenant en outre l'alimentation d'un dispositif de mise en ligne (32) par le deuxième crible (24).

10. Procédé selon l'une des revendications 6 à 9 comprenant le renversement d'un système de stockage (3) des objets cylindriques (5) sur le premier crible (14).

11. Procédé selon l'une des revendications 6 à 10 comprenant la récupération des éclats et poussières des objets cylindriques passant à travers les cribles (14, 24).

12. Utilisation du dispositif selon l'une des revendications 1 à 5 ou du procédé selon l'une des revendications 6 à 12 pour la mise en ligne de pastilles de combustible nucléaire.

## Claims

1. Conveyor device (10), intented to carry cylindrical objects (5) possibly containing chips, such as nuclear fuel pellets, the device comprising at least a first vibrating screen (14) and a second vibrating screen (24) each enabling displacement of the objects along a first direction by vibration, the first screen (14) and the second screen (24) each being composed of parallel bars (16, 26) at regular intervals, for which the longitudinal axis forms the first direction, these bars being positioned one after the other in the direction of displacement and being separated from each other along a second vertical direction, device in which each screen (14, 24) is coupled to vibrating means (18, 28) independent from each other, such that the displacement speed on the second screen (24) is greater than the displacement speed on the first screen (14).

2. Device according to claim 1 in which bars of each screen are similar, and bars (26) of the second screen (24) are offset by half a pitch from the bars (16) of the first screen (14) in the plane of the screen.

3. Device according to claim 1 or claim 2 also comprising a corridor (12) connected to the upstream side of the first screen (14) and enabling the displacement of cylindrical objects (5) along the first direction towards the first screen (14).

4. Device according to any of preceding claims also comprising at least one pot (30) designed to recover chips and dust passing through the screens (14, 24).

5. Device according to any of preceding claims also comprising a vibrating bowl (32) on the downstream side of the last screen (24).

6. Method for aligning cylindrical objects (5) possibly containing chips, such as nuclear fuel pellets, method comprising positioning of cylindrical objects on a first screen (14), displacement of objects (5) by vibrating the first screen (14) along a first direction towards an end of the first screen (14), cylindrical objects (5) dropping on a second screen (24) located under the first screen (14), displacement of objects (5) on the second screen (24) by its vibration, method in which the displacement speed of objects (5) on the second screen (24) is greater than the displacement speed of objects (5) on the first screen (14).

7. Method according to claim 6 in which the second screen (24) is vertically separated from the first screen (14) by a distance (d) smaller than the length of the objects (5).

8. Method according to claim 6 or claim 7 in which each screen (14, 24) is composed of parallel bars (16, 26) spaced at a constant pitch along the displacement direction of the cylindrical objects (5), the bars (26) of the second screen (24) being offset by half a pitch from bars (16) in the first screen (14) in the plane of the screens.

9. Method according to any of claim 6 to claim 8 also comprising the supply of an alignment device (32) through the second screen (24).

10. Method according to any of claim 6 to claim 9 comprising a storing system (3) turning over the cylindrical objects (5) on the first screen (14).

11. Method according to any of claim 6 to claim 10 comprising recovery of chips and dust from cylindrical object passing through the screens (14, 24).

12. Use of the device according to any of claim 1 to claim 5 or the method according to any of claim 6 to claim 11 for aligning nuclear fuel pellets.

## Patentansprüche

1. Fördervorrichtung (10) für zylindrische Objekte (5), die Splitter enthalten können, wie zum Beispiel Kernbrennstoffpastillen, wobei die Vorrichtung wenigstens ein erstes vibrierendes Sieb (14) und ein zweites vibrierendes Sieb (24) umfaßt, die jeweils die Verlagerung der Objekte entlang einer ersten Richtung durch ihre Vibration erlauben, wobei das erste Sieb (14) und das zweite Sieb (24) jeweils durch gleichmäßig beabstandete, parallele Stäbe (16, 26) gebildet sind, deren longitudinale Achse die erste Richtung bildet und die in der Verlagerungsrichtung aufeinanderfolgend angeordnet und in einer zweiten vertikalen Richtung voneinander beabstandet sind, wobei bei der Vorrichtung jedes der Siebe (14, 24) mit voneinander unabhängigen Mitteln zum In-Vibration-Versetzen (18, 28) gekoppelt ist, derart, dass die Verlagerungsgeschwindigkeit auf dem zweiten Sieb (24) größer ist als die Verlagerungsgeschwindigkeit auf dem ersten Sieb (14).

2. Vorrichtung nach Anspruch 1, bei der die Stäbe jedes Siebs einander ähnlich sind, und bei der die Stäbe (26) des zweiten Siebs (24) bezogen auf die Stäbe (16) des ersten Siebs (14) in der Ebene des Siebs um einen halben Schritt versetzt sind.

3. Vorrichtung nach einem der Ansprüche 1 oder 2, ferner umfassend eine Zuführung (12), die stromaufwärts des ersten Siebs (14) angeschlossen ist und die Verlagerung der zylindrischen Objekte (5) entlang der ersten Richtung zum ersten Sieb (14) hin erlaubt.

4. Vorrichtung nach einem der vorhergehenden Ansprüche, ferner umfassend wenigstens einen Topf (30), der es erlaubt, Splitter und Stäube zu sammeln, die durch die Siebe (14, 24) hindurchgelangt sind.

5. Vorrichtung nach einem der vorhergehenden Ansprüche, ferner umfassend eine vibrierende Schale (32) stromabwärts des letzten Siebs (24).

6. Verfahren zum Aufreihen zylindrischer Objekte (5), die Splitter enthalten können, wie zum Beispiel Kernbrennstoffpastillen, welches Verfahren die Positionierung der zylindrischen Objekte auf einem ersten Sieb (14) umfaßt, die Verlagerung der Objekte (5) mittels Vibration des ersten Siebs (14) in einer ersten Richtung zu einem Ende des ersten Siebs (14) hin, den Fall der zylindrischen Objekte (5) auf ein zweites Sieb (24), das unter dem ersten Sieb (14) angeordnet ist, die Verlagerung der Objekte (5) auf dem zweiten Sieb (24) mittels dessen Vibration, bei welchem Verfahren die Verlagerungsgeschwindigkeit der Objekte (5) auf dem zweiten Sieb (24) größer ist als die Verlagerungsgeschwindigkeit der Objekte (5) auf dem ersten Sieb (14).

7. Verfahren nach Anspruch 6, bei dem das zweite Sieb (24) vertikal vom ersten Sieb (14) um einen Abstand (d) beabstandet ist, der kleiner ist als die Länge der Objekte (5).

8. Verfahren nach einem der Ansprüche 6 oder 7, bei dem jedes Sieb (14, 24) aus parallelen Stäben (16, 26) zusammengesetzt ist, die in der Verlagerungsrichtung der zylindrischen Objekte (5) um einen konstanten Schritt voneinander beabstandet sind, wobei die Stäbe (26) des zweiten Siebs (24) von den Stäben (16) des ersten Siebs (14) in der Ebene der Siebe um einen halben Schritt beabstandet sind.

9. Verfahren nach einem der Ansprüche 6 bis 8, ferner umfassend die Versorgung einer Vorrichtung zum Aufreihen (32) mittels des zweiten Siebs (24).

10. Verfahren nach einem der Ansprüche 6 bis 9, umfassend das Umstürzen eines Systems (3) zur Lagerung der zylindrischen Objekte (5) auf das erste Sieb (14).

11. Verfahren nach einem der Ansprüche 6 bis 10, umfassend das Sammeln von Splittern und Stäuben der zylindrischen Objekte, die durch die Siebe (14, 24) hindurchgelangen.

12. Verwendung der Vorrichtung nach einem der Ansprüche 1 bis 5 oder des Verfahrens nach einem der Ansprüche 6 bis 11 für die Aufreihung von Kernbrennstoffpastillen.
